# EUROPEAN PATENT SPECIFICATION

(11) **EP 3 603 866 B1**
(45) Date of publication and mention of the grant of the patent: **30.12.2020**
(21) Application number: 19189672.9
(22) Date of filing: 01.08.2019
(51) Int. Cl.: B23H 9/00, B23P 19/02, F22B 37/00, B23H 1/04

(54) **APPARATUS AND METHOD FOR CUTTING AN ELECTRICALLY CONDUCTIVE TUBE**
VORRICHTUNG UND VERFAHREN ZUM SCHNEIDEN EINES ELEKTRISCH LEITENDEN ROHRES
APPAREIL ET PROCÉDÉ POUR COUPER UN TUBE ÉLECTRIQUEMENT CONDUCTEUR

(30) Priority: 02.08.2018 LU 100892
(43) Date of publication of application: 05.02.2020
(73) Proprietor: Univerza V Ljubljani, 1000 Ljubljana (SI); NUMIP Engineering, Construction, Maintenance and Production Ltd., 1000 Ljubljana (SI)
(72) Inventor: Valentincic, Josko, 1000 Ljubljana (SI); Sabotin, Izidor, 1000 Ljubljana (SI); Resnik, Matic, 1000 Ljubljana (SI); Dresar, Pavel, 4211 Mavcice (SI); Matjaz, Nejc, 1000 Ljubljana (SI); Jerman, Marko, 1000 Ljubljana (SI); Lebar, Andrej, 4290 Trzic (SI); Pleterski, Matej, 8275 Skocjan (SI)
(74) Representative: Zacco GmbH

(56) References cited:
- FR-A1- 2 591 922
- US-A- 2 920 180
- US-A- 2 942 092
- US-A- 4 476 368
- US-A- 4 779 496
- US-A- 5 543 599

## Description

The present invention relates to an apparatus and a method for cutting an electrically conductive tube.

Systems having tubing, such as heat exchanger systems, may require maintenance or periodic inspection, in particular if used in a safety-related environment, such as a nuclear power plant. Specifically, the tubing may be investigated in order to uncover any defect or degradation. Heat exchanger tubes may experience tube wall cracking and thus may not remain leak-tight. A problem that may occur in a nuclear power plant is limited access and a difficult working environment, including a radiologically controlled area of the nuclear power plant.

When it is determined that a tube shall be removed, it has to be extracted from the system. An operation which is usually carried out prior to tube extraction is the process of cutting the tube from the tubing remaining at the system. An approach may further include cutting the tube into two parts and remove both parts from the heat exchanger by pulling it from tube sheets through which the parts extend. Afterwards, the remaining holes in the tube sheets may be tightly closed.

Electrothermal processes may be advantageously used for the purpose of tube cutting since such processes normally produce debris in a size of dust particles. The debris or chips may for example enter a secondary system of a heat exchanger of a nuclear power plant where large particles may cause damage during the operation of the nuclear power plant while floating in secondary fluid.

US 4,779,496 uses mechanical energy for material removal by a cutting blade which is slidably insertable within a tube. In this patent and as known from the practice it is of importance for the cutting system to be able to be inserted into a curved (e.g. U-bend section of a tube) or geometrically altered (e.g. dented) tube.

The following prior art documents use electrothermal energy for material removal. US 3,995,134 describes an apparatus principally for producing holes in the wall of a passage in a workpiece, the apparatus has a curved tube insertable into the passage and an elongate flexible electrode is fed into the tube and deflected thereby to produce the desired holes.

US 4,584,452 describes an apparatus which employs electrical discharges in combination with ultrasonic vibrations of the electrode and is mainly used to cut holes in the tube in confined locations.

US 2,942,092 describes a rotating cutter wheel eccentrically mounted to an end of a flexible shaft. Due to eccentric weight and centrifugal force the cutter swings towards conductive tube and by introducing an electrical disintegrator current, the arcing helps disintegrating the tube. A difficulty with this solution might be that an uncontrolled movement of the electrode wheel occurs, as the eccentric weight of such electrode causes uncontrolled bouncing off the internal wall of the tube causing uncontrolled position of the disintegrator arc.

From US 3,833,785 it has further been known that a disintegrator arc in connection with an axially vibrating electrode and axially forward slow feed can be applied to disintegrate a workpiece. However, difficulties with this solution might stem from arcing occurring primarily along the axial forward end of the electrode. Thus, such mechanism could not be effectively used to burn away the radial part of the tube wall relative to the outer end of the electrode.

US 4,476,368 and US 4,916,282, disclose an apparatus for tube disintegration. Both are describing a feeding mechanism to control accurately the gap between a tool electrode and a tube wall, which is essential when electrical discharge machining is utilised. The apparatus described in US 4,476,368 employs an eccentric electrode. The document US 4,476,368 A also discloses an apparatus in accordance with the preamble of claim 1.

US 5,077,456 describes a portable device for cutting the inside wall of a tube by a continuous arc.

The present invention seeks to provide a simple, flexible, easy to use and cost efficient apparatus for cutting a tube.

The object is satisfied by an apparatus in accordance with the features of claim 1. Preferred embodiments of the present invention are described in the dependent claims.

In accordance with the present invention, an apparatus for cutting an electrically conductive tube comprises:
an electrode adapted to be introduced into a tube such that a longitudinal axis of the electrode is, at least in substance, arranged in parallel to or coincident with a central axis of the tube,
an electric voltage source for providing an electric voltage between the electrode and the tube, in particular for generating electric discharges between the electrode and the tube section,
an electric motor for rotating the electrode around the longitudinal axis,
a coupling element for coupling the electrode to the motor, the coupling element being adapted to transmit a rotational movement of a shaft of the motor to the electrode such that the electrode rotates around its longitudinal axis,
a gas passage for introducing gas into the interior of the tube, the gas passage comprising a straight gas pipe arranged along the longitudinal axis between the motor and the electrode, and
the coupling element comprises a connecting element which extends along the longitudinal axis through the inside of the gas pipe, the connecting element having a first end attached to the motor shaft and a second end held by the gas pipe.

The electrode can be formed by two symmetrical electrodes. The two electrodes are designed and arranged such that the arrangement of the two electrodes is rotational symmetric with respect to the longitudinal axis. Each of the two electrodes can have a cross-sectional shape - in a plane perpendicular to the longitudinal axis - that is - at least approximately - of a partially annular form.

The gas pipe can be bendable. The gas pipe can consist of or comprise a flexible material. For example, the gas pipe can consist of or comprise of polyurethane and be in the form of a polyurethane tube. The gas pipe can therefore be introduced into a curved tubing.

The apparatus can in particular be used to cut the tube into two parts. This allows a removal of at least one of the tube parts from the associated system, such as a heat exchanger system, for example in a nuclear power plant. In operation, the electrode, which may also consist of or comprise two symmetrical electrodes, rotates inside the tube and the electric discharges occurring between the electrode and the inner surface of the tube cause a material removal from the inner surface of the tube. Due to the rotation of the electrode, the material removal takes place along the circumferential direction of the inner tube surface and thus results, if carried out for a sufficient amount of time, in a cutting of the tube into two parts.

The gas pipe, the coupling element and the electrode can be arranged in a compact form, in particular with regard to their extension in the directions radial to the longitudinal axis. Thus, the electrode and at least to some extent the gas pipe and the coupling element can be introduced into the tube enabling a cutting of the tube from the inside.

Moreover, as the first end of the connecting element is attached to the motor shaft and the second end of the connecting element is held by the gas pipe, the connecting element can be kept under tension even if the connecting element expands, for example due to thermal effects. This may in particular ensure a stable position of the electrode in the direction radial to the longitudinal axis of the tube.

The gas pipe may be used to provide gas, in particular air, to the inside of the tubing and in particular between the electrode and the inner surface of the tube as well as towards the coupling element and specifically towards the connecting element which is arranged in the inside of the gas pipe. The gas may be used for the melted material removal and cooling purposes.

The apparatus may further comprise a tension device configured to bias the gas pipe along the longitudinal direction away from the motor shaft. The longitudinal direction is the direction oriented along the longitudinal axis. The tension device may therefore, for example via a spring, exert a force directed along the longitudinal direction away from the motor shaft and thus towards the electrode. The force may keep the gas pipe under tension. Moreover, as the first end of the connecting element is connected to the motor shaft and the second end of the connecting element is held by the gas pipe, the force exerted by the spring on the gas pipe also ensures that the connecting element is kept under tension, in particular under a constant tension. It also ensures a constant position of the cutting head within the pipe and improves control over symmetrical electrode bouncing within the tube and as such erodes material at the specific radial direction to the outer end of the electrode. The cutting head comprises the at least one electrode and the cutting head may comprise further components to couple the electrode or electrodes to the connecting element. The tension device may also help to ensure that the connecting element can transmit a rotational movement around the longitudinal axis from the motor shaft to the electrode, even if the connecting element expands its length along the longitudinal axis, for example due to a heating of the connecting element.

The term "held" is to be interpreted in a broad sense. In particular, the term shall imply that the gas pipe holds the second end of the connecting element in such a way that a rotation of the connecting element around the longitudinal direction is possible. Furthermore, the term "held" may be understood such that the gas pipe at least restricts or limits a movement of the second end of the connecting element along the longitudinal axis and towards the motor shaft. The gas pipe, in particular its second end, may therefore act as an abutment element limiting a movement of the second end of the connecting element towards the motor shaft.

The connecting element, which may comprise or consist of an electric cable, in particular a braided electric cable or wire, may form part of an electric connection between the electrode and a terminal of the voltage source. The other terminal of the voltage source may connect to the tube. The voltage difference between the electrode and the tube may generate electric discharges between the electrode and the tube. The electric discharges may remove material from the inner surface region of the tube which is facing the rotating electrode. This material removal, carried out over a sufficient period of time, allows a cutting of the tube, for example into two separated parts.

The electric current flowing through the connecting element, in particular the electric cable, may heat up the connecting element and thus increase the length of the connecting element along the longitudinal axis. The force exerted by the spring on the gas pipe ensures that the connecting element remains under tension despite this increase in length. Furthermore, a constant position of the cutting head and thus of the at least one electrode as well as of the electrode removal position can be ensured.

The tension device of the apparatus may comprise at least one hollow rod, in particular at least one threaded hollow rod, having a first end facing a shaft of the motor and a second end distal to the motor, a first end of the gas pipe is held by the distal second end of the at least one hollow rod. The at least one hollow rod may therefore serve as a holder for the first end of the gas pipe and secure the arrangement of the first gas pipe such that it extends along the longitudinal axis.

Preferably, the at least one hollow rod is formed by two threaded hollow rods coupled to each other by use of a turnbuckle sleeve. This is particularly useful for mounting and dismounting purposes as well as for obtaining a final adjustment of the force that is exerted by the spring on the gas pipe.

The at least one hollow rod can be movable along the longitudinal direction. The apparatus may comprise guiding means for guiding a movement of the at least one hollow rod along the longitudinal direction. The possibility to move along the longitudinal direction may be limited. Furthermore, the guiding means may be fixed to an unmovable component of the apparatus, such as the housing of the electric motor.

A spring may be arranged between the shaft of the motor and the first end of the at least one rod. The spring may bias the at least one rod along the longitudinal direction and away from the electric motor. The force provided by the spring may in particular keep the connecting element under tension and thereby compensate for an extension of the connecting element, for example due to thermal effects.

A central axis of the at least one hollow rod may be at least in substance coincident with a central axis of the coupling element. The connecting element may extend in the inside of the at least one hollow rod. The at least one hollow rod may thereby protect the coupling element.

A second end of the gas pipe, which is facing the electrode, may be adapted to receive a bearing, in particular a rotary bearing or a plain bearing, of the coupling element. The connecting element may therefore be held in the region of the second end of the gas pipe by use of the bearing which may be configured to enable the rotational movement of the connecting element around the longitudinal axis. In particular, the second end of the connecting element may be attached to a movable part of the bearing, while the stationary part of the bearing may be received by the second end of the gas pipe. Additionally, an effective clamping of the position of the cutting head and thus of the position of the at least one electrode is obtained.

The second end of the gas pipe may have a widened, preferably conical, mouth adapted to receive a conical element of the bearing. The second end of the gas pipe may be formed, for example, in the form of a split end. The bearing, in particular the stationary part of the bearing, may have a conical form which can be received by the widened second end of the gas pipe, but it cannot slide in the gas pipe beyond a certain point along the longitudinal direction towards the shaft of the motor. Thus, the gas pipe may fix the position of the second end of the connecting element in the gas pipe. This may also ensure a fixation of the position of the electrode with respect to the longitudinal direction.

The rotatable part of the bearing may be connected with the electrode, in particular via at least one spring, in particular a flat spring, having one end connected to the electrode and another end connected to a spring holder which is connected to the rotatable part of the bearing. A rotary movement of the shaft of the motor can therefore be transferred to the electrode. The dimensions of the flat spring may be as follows: length from 10 to 90 mm, width from 1 to 10 mm, and thickness from 0.1 to 1 mm.

As a further example, the dimensions of the flat spring may be as follows: length from 20 to 50 mm, width from 3 to 7 mm, and thickness from 0.2 to 0.7 mm.

Preferably, the gas passage comprises a T-piece having three ports, a first port of the T-piece exiting in the gas pipe towards the electrode, a second port of the T-piece exiting in the gas pipe towards the electromotor, and a third port of the T-piece being connected to a gas supply. Gas, for example air, can thereby be brought into the gas pipe such that the gas flows between the coupling element and the gas pipe and may flow in two directions, namely towards the electrode and towards the electric motor. By this the gas needed for blowing out the melted material from a cutting zone is conducted and can be simultaneously used for cooling down the connecting and coupling elements as well as the cutting head. The cutting zone relates to the short section of the tube where it is cut through by use of the at least one electrode.

When a slot is cut in the tube wall, and before the tube is cut into two pieces, some cutting debris may enter into the heat exchanger. This is an unwanted effect, as dust particles may be introduced into the heat exchanger which is undesirable. In some embodiments of the invention, a vacuum cleaner can be placed at the other end of the tube. Thus particles do not contaminate the heat exchanger. Alternatively or additionally, a vacuum might be exerted for example like a sucking mechanism, at the T-piece.

The combination of manipulating the tension device and of supplying compressed air (or a gas) might be used for quick and simple detachment and/or relaxation of the fixated cutting head after the cutting operation. After turning off the voltage supply and rotation of the electric motor the turnbuckle sleeve is rotated in the direction that relaxes the spring used by the tension device. Approximately 1 bar higher air pressure, than it is used at cutting cycle, is introduced in the T-piece. This additional pressure pushes the conical element out of widened second end of the gas pipe and thus, relaxes the fixating effect. This enables quick and simple extraction of the cutting head from the tube.

The coupling element, in particular the connecting element, may be electrically conductive and attachable to a terminal of a voltage supply. The terminal of the voltage supply may in particular be connected with the connecting element at the first end, where the connecting element is attached to the motor shaft.

The connecting element may comprise or consist of an electrical cable, in particular a braided cable. Thereby, a simple and cost efficient way of electrically connecting the electrode with the terminal of the voltage supply as well as of transferring a rotational motion of the motor shaft to the electrode can be provided. The combination of flexible connecting element, fixation mechanism and cutting head allows that said elements can be inserted into a U-bent or into curved or dented tubes, making the whole apparatus flexible to be used on a variety of tubular members. The term "fixation mechanism" hereby refers to the fixation of the second end of the connecting element, such as the electrical cable, to the gas pipe. The fixation is for example such that the connecting element can rotate, and the fixation can include the above mentioned bearing having a stationary part with a conical form which is received by a conically widened second end of the gas pipe.

The electric voltage source can be adapted to provide DC current or electrical voltage pulses. In case of voltage pulses, the pulse on and pulse off time may be in the range of milliseconds. In the case of the DC current as well as in the pulsed case, the electrical current may reach 50 A or more.

The radius of the electrode surface that is facing the inner surface of the tube is preferably in the range from 0.7 to 0.95 of the radius of the inner diameter of the tube. As the electrode cuts through the portion of a tube wall there exists a chance that it may be stuck in the said slot. To overcome this shortcoming a taper is added to the electrode design, right after the circumference of the electrode where the material removal takes place. This tapered feature disables the electrode to move further out of the slot by acting centrifugal force due to mechanical barrier presented by the taper.

In some embodiments, the apparatus comprises a pneumatic gas pipe, a tension device and a conically shaped stationary part of a bearing over which the gas pipe is pushed using a tensioning mechanism provided by the tension device. Due to the possible flexibility of the gas pipe the cutting head can be inserted also into bent pipes and the like.

Embodiments of the present invention can provide a specially designed cutting head fixation mechanism, which can include the above mentioned bearing having a stationary part with a conical form which is received by a conically widened second end of the gas pipe. Such a fixation mechanism can provide a better control over symmetrical electrodes bouncing within the tube and as such erodes material at the specific radial direction to the outer end of the electrode. The cutting head can also be inserted through curved or dented tube sections with an arbitrary position along the tube.

The invention also relates to a method of cutting an electrically conductive tube, in particular a tube of a heat exchanger system, for example of a nuclear power plant, with an apparatus in accordance with the present invention. The method comprises the steps:
introducing an electrode of the apparatus,
operating the electric motor to rotate the electrode around its longitudinal axis, and
while rotating the electrode around its longitudinal axis, applying an electric voltage between the electrode and the tube to generate electric discharges between the electrode and the tube.

It is also described herein an electrode, in particular for use in an apparatus in accordance with the present invention, the electrode comprises a first end section, a second end section, and an intermediate section interconnecting the first end section and the second end section,
wherein an outer diameter of the first end section is larger than an outer diameter of the second end section, and wherein the intermediate section has a conical form such that the diameter of the intermediate section gradually increases from the smallest diameter where the intermediate section is adjacent of the second end section to the largest diameter where the intermediate section is adjacent of the first end section.

The diameter of the first and second end sections as well as the increasing diameter of the conical intermediate section is preferably measured with respect to the longitudinal axis around which the electrode rotates when the electrode is used as intended.

It is also described herein a pair of such electrodes arranged symmetrical around the longitudinal axis around which the electrodes rotate when used as intended.

One or more examples will hereinafter be described in conjunction with the following drawing figures, where like numerals denote like elements, and
- Fig. 1: shows schematically a side view of an exemplary embodiment of a cutting apparatus in accordance with the present invention,
- Fig. 2: shows schematically a partial side view of the apparatus of Fig. 1,
- Fig. 3: shows schematically a further partial side view of the apparatus of Fig. 1,
- Fig. 4: shows schematically a cross-sectional view of a gas passage of the apparatus of Fig. 1,
- Fig. 5: shows a cross-sectional view of an exemplary embodiment of an electrode, and
- Fig.6: shows a cross-sectional side view of the electrode of Fig. 5.

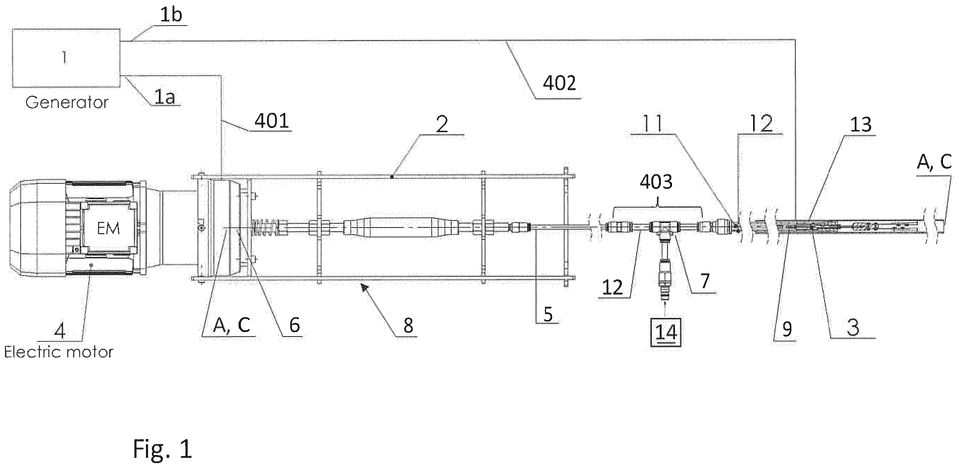

The cutting apparatus described with regard to Figs. 1 to 4 comprises an electrode 310 adapted to be introduced into a straight tube 13 such that a longitudinal axis A of the electrode 310 is coincident with a central axis C of the tube 13. The apparatus includes an electric voltage source 1 for providing an electric voltage between the electrode 310 and the tube 13, in particular for generating electric discharges between the electrode 310 and the tube 13. An electric motor 4 of the apparatus is used for rotating the electrode 310 around the longitudinal axis A, and a coupling element 5 serves to couple the electrode 310 to a shaft 6 of the motor 4. The coupling element 5 is adapted to transmit a rotational movement of the motor shaft 6 to the electrode 310 such that the electrode 310 rotates around the longitudinal axis A.

A gas passage 7 can introduce gas, such as air, into the interior of the tube 13. The gas passage 7 comprises a straight gas pipe 12 arranged along the longitudinal axis A between the motor 4 and the electrode 310.

The coupling element 5 comprises a connecting element 11, which may be an electric cable or a conductive wire and which extends along the longitudinal axis A and at the inside of the gas pipe 12. The connecting element 11 has a first end attached to the motor shaft 6 and a second end 11a held by the gas pipe 12.

The coupling element 5 is electrically conductive and attached to a terminal 1a of the voltage source 1 as shown in Fig. 1. A conductive line 401 is used to deliver the voltage signal from the terminal 1a to the motor 4 where the signal is feed into the coupling element 5, in particular without disturbing the motor 4. The coupling element 5 is designed such that it provides a conductive path to the electrode 310. The second terminal 1b of the voltage source 1 can be attached to the tube 13, also via a conductive line 402. Thereby, a voltage difference can be applied between the electrode 310 and the tube 13 causing electric discharges in the gap between the electrode 310 and the tube 13. The discharges cause a material removal from the inner surface of the tube 13 while the electrode 310 is rotating around the longitudinal axis A. This material removal finally allows cutting the tube into two separated parts.

The apparatus further comprises a tension device 2 configured to bias the gas pipe 12 along the longitudinal axis A away from the motor shaft 6. The tension device 2 comprises two threaded hollow rods 208, 213, coupled to each other by use of a turnbuckle sleeve 212 and having a first end 208a facing the shaft 6 of the motor 4 and a second end 213a distal to the motor 4. A first end 12a of the gas pipe 12 is held by the second end 213a of the rod 213. In the shown example, the gas pipe 12 is fixed at the second end 213a by use of a standard pneumatic connector 216.

The tension device 2 comprises guiding means 8 which allow a movement of the hollow rods 208, 213 along the longitudinal direction. The guiding means 8 comprise two side steel sheets 201 and 202, detachable jointed to a metal sheet 203 mounted, preferably screwed, to the electric motor 4 and the metal sheet 206 located away from the electric motor 4. A first intermediate sheet 204 is mounted to the hollow threaded rod 208 preferably by use of two nuts 210 and 211. A second intermediate sheet 205 is mounted to the other hollow threaded rod 213 preferably by use of two nuts 214 and 215. Both intermediate sheets 203 and 204 can freely move in the axial direction of the braided wire or cable 11. The axial movement is guided by the side sheets 201 and 202.

The tension device 2 further includes a spring 207 arranged between the shaft 6 of the motor 4 and the first end 208a of the two rods 208, 213. The spring 207 exerts a force on the rods 208, 213 and the gas pipe 12 which is directed away from the motor shaft 6 and along the longitudinal direction.

A central axis of the two hollow rods 208, 213 is coincident with a central axis of the coupling element 5, which extends inside of the rods 208, 213.
A second end 12b of the gas pipe 12, which is facing the electrode 310, is adapted to receive a bearing 9, such as a rotary bearing or a plain bearing, of the coupling element 5 in a widened, preferably conical, mouth at the second end 12b of the gas pipe 12.

The second end 11a of the connecting element 11 is attached to a rotatable part of the bearing 9, which is rotatable around the longitudinal axis A.
The bearing 9 comprises a conical shaped element 304 which is stationary and which can be pulled into the gas pipe 12, thus fixing the position of a cutting head 3 in the tube 13. The greatest diameter of the conical element 304 plus two times the wall thickness of the gas pipe 12 is preferably larger than the inner diameter of the tube 13.

An adapter 301 is mounted to the end of the braided cable 11 by any means, e.g. screwed or soldered. A hole on the other side of adapter 301 is threaded and a threaded gear 302 is screwed into adapter 301. A rotation of the gear 302 in the conical element 304 is enabled by a bearing or bushing 303 that is preferably a bit longer than the conical element 304 and that has a smaller outer diameter than the hole in the conical element 304. The precision of the axial position of the electrode 310 thus depends in the described example on the difference in both lengths.

Nuts 305 and 306 are used to prevent the unscrewing of the gear 302 and to fix the axial position of the conical shaped element 304. A spring holder 308 is screwed or by any other means mounted to the gear 302 and fixed by nut 307. Furthermore, flat springs 309 are screwed on a spring holder 308 and on each spring 309 the tool electrode 310 is mounted. The electrode 310 may be made of or may comprise a metal, such as silver, gold or copper. Preferably, the electrode is made of or may comprise electrolytic copper.

The force used to fix the bearing 9 and the cutting head 3 in the tube 13 is obtained by spring 207. The nut 209 may be used for adjusting the fixing force and the turnbuckle sleeve 212 may be used for mounting and dismounting purposes as well as for fine adjustment of the fixing force.

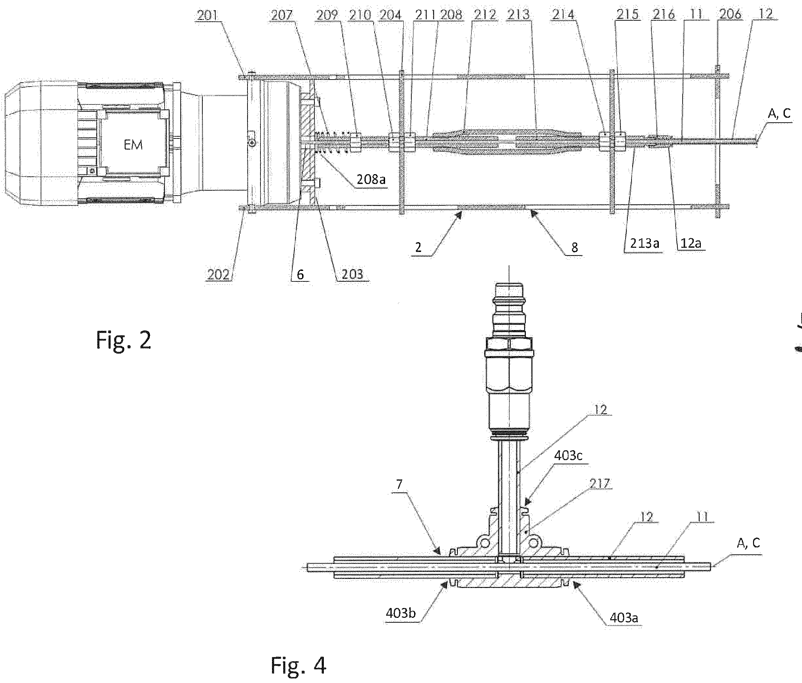

As shown in particular in Fig. 4, the gas passage 7 comprises a standard pneumatic T-piece 403 having three ports. A first port 403a of the T-piece 403 exits in the gas pipe 12 towards the electrode 310, a second port 403b exits in the gas pipe 403 towards the electromotor 4, and a third port 403c of the T-piece 403 is connected to a gas supply, in particular a compressor 14, which can provide compressed air to the gas passage.

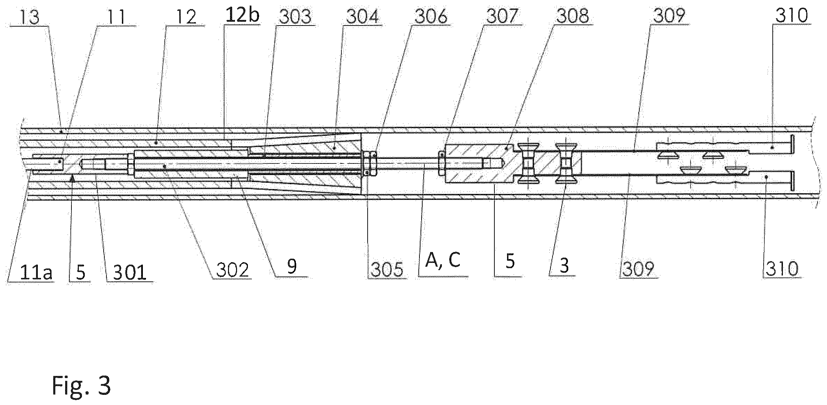

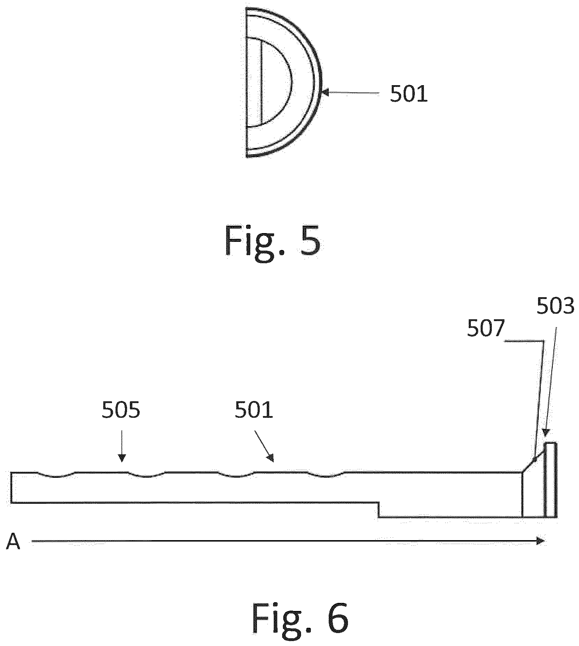

Fig. 5 shows a cross-sectional view of an exemplary embodiment of an electrode. The cross-section is in a plane which is perpendicular to the longitudinal axis A. Fig. 6 shows a cross-sectional side view of the electrode of Fig. 5. The cross-sectional view of Fig. 6 is in a plane that includes the longitudinal axis. The electrode 501 shown in Figs. 5 and 6 corresponds to one of the two electrodes 310 shown in Fig. 3. The electrode 501 forms with a second electrode (not shown) an arrangement which is symmetric with respect to the axis A, similar to the arrangement with two electrodes 310 shown in Fig. 3.

As shown in FIG. 5, the cross section of the electrode 310 may be part circular, or semicircular, or part annular or semi-annular. Furthermore, as shown in Fig. 6, the electrode 501 comprises a first end section 503 and a second end section 505. The first end section 503 forms the end of the electrode 501 which is distal from the motor 4. In other words, the first end section 503 is inserted the furthest into the tube 13. The second end section 505 forms the other end of the electrode 501. The second end section 505 is therefore closer to the motor 4 than the first end section 503.

Fig. 6 shows that - with respect to the longitudinal axis A - the outer diameter of the first end section 503 is larger than the outer diameter of the second end section 505. An intermediate section 507 interconnects the first end section 503 and the second end section 505. The intermediate section 507 has a conical form. The diameter of the intermediate section 507 gradually increases from the smallest diameter where the intermediate section 507 is adjacent of the second end section 505 to the largest diameter where the intermediate section 507 is adjacent of the first end section 503.

The use of a pair of electrodes 501 in conjunction with the described apparatus is advantageous as such electrodes help to maintain a constant position of the electrodes 501 with respect to the axial direction, and the electrodes 501 allow for a simple removal of the electrodes 501 out of the tube 13 after cutting, in particular due to the conical form of the intermediate section 507. The tapered section 507 can also prevent the electrode(s) from getting stuck in the tube wall slot created prior to cutting the tube into two parts.

### LIST OF REFERENCE SIGNS

- 1: voltage source
- 1a: terminal
- 1b: terminal
- 2: tension device
- 3: cutting head
- 4: electric motor
- 5: coupling element
- 6: shaft
- 7: gas passage
- 8: guiding means
- 9: bearing
- 11: connecting element, cable
- 11a: second end
- 12: gas pipe
- 12a: first end
- 12b: second end
- 13: tube
- 14: compressor
- 201: sheet
- 202: sheet
- 203: sheet
- 204: sheet
- 205: sheet
- 206: sheet
- 207: spring
- 208: threaded rod
- 208a: first end
- 210: nut
- 211: nut
- 212: turnbuckle sleeve
- 213: threaded rod
- 213a: second end
- 214: nut
- 215: nut
- 216: connector
- 301: adapter
- 302: threaded gear
- 303: bushing
- 304: conical shaped element
- 305: nut
- 306: nut
- 307: nut
- 308: spring holder
- 309: flat spring
- 310: electrode
- 401: conductive line
- 402: conductive line
- 403: T-piece
- 403a: port
- 403b: port
- 403c: port
- 501: electrode
- 503: first end section
- 505: second end section
- 507: intermediate section
- A: longitudinal axis
- C: central axis

## Claims

1. An apparatus for cutting an electrically conductive tube (13), the apparatus comprising:
an electrode (310) adapted to be introduced into a tube (13) such that a longitudinal axis (A) of the electrode (310) is at least in substance arranged in parallel to or coincident with a central axis (C) of the tube (13),
an electric voltage source (1) for providing an electric voltage between the electrode (310) and the tube (13), in particular for generating electric discharges between the electrode (310) and the tube (13),
an electric motor (4) for rotating the electrode (310) around the longitudinal axis (A),
a coupling element (5) for coupling the electrode (310) to the motor (4), the coupling element (5) being adapted to transmit a rotational movement of a shaft (6) of the motor (4) to the electrode (310) such that the electrode (310) rotates around its longitudinal axis (A),
a gas passage (7) for introducing gas into the interior of the tube (13), the gas passage (7) comprising a straight gas pipe (12) arranged collinear with the longitudinal axis (A) between the motor (4) and the electrode (310), and
the coupling element (5) comprises a connecting element (11) which extends collinear with the longitudinal axis (A) through the inside of the gas pipe (12), the connecting element (11) having a first end attached to the motor shaft (6) and a second end (11a) held by the gas pipe (12),
**characterized in that**
a tension device (2) of the apparatus comprises at least one hollow rod (208, 213) having a first end (208a) facing a shaft (6) of the motor (4) and a second end (213a) distal to the motor (4), and that a first end (12a) of the gas pipe (12) is held by the second end (213a) of the at least one hollow rod (208, 213).

2. The apparatus of claim 1,
**characterized in that**
the apparatus comprises a tension device (2) which is configured to bias the gas pipe (12) along the longitudinal axis (A) away from the motor shaft (6).

3. The apparatus of claim 1 or 2,
**characterized in that**
the at least one hollow rod (208, 213) is at least one threaded hollow rod.

4. The apparatus of any one of claims 1 to 3,
**characterized in that**
the at least one hollow rod comprises or consists of two threaded hollow rods (208, 213) coupled to each other by use of a turnbuckle sleeve (212).

5. The apparatus of any one of the preceding claims,
**characterized in that**
the at least one hollow rod (208, 213) is movable along the longitudinal axis (A), wherein, preferably, the apparatus comprises guiding means (8) enabling a movement, in particular a sliding movement, of the at least one hollow rod (208, 213) along the longitudinal axis (A).

6. The apparatus of any one of the preceding claims,
**characterized in that**
a spring (207) is functionally arranged between the shaft (6) of the motor (4) and the first end (208a) of the at least one rod (208, 213).

7. The apparatus of any one of the preceding claims,
**characterized in that**
a central axis of the at least one hollow rod (208, 213) is at least in substance coincident with a central axis of the coupling element (5).

8. The apparatus of any one of the preceding claims,
**characterized in that**
the connecting element (11) extends at the inside of at least one hollow rod (208, 213).

9. The apparatus of any one of the preceding claims,
**characterized in that**
a second end (12a) of the gas pipe (12), which is facing the electrode, is adapted to receive a bearing (9), in particular a rotary bearing or a plain bearing, of the coupling element (5).

10. The apparatus of claim 9,
**characterized in that**
the second end (12a) of the gas pipe (12) has a widened, preferably conical, mouth adapted to receive a conical element of the bearing (9).

11. The apparatus of claim 9 or 10,
**characterized in that**
the second end (11a) of the connecting element (11) is attached to a rotatable part (301, 302) of the bearing (9), the rotatable part (301, 302) of the bearing (9) being rotatable around the longitudinal axis (A).

12. The apparatus of claim 11,
**characterized in that**
the rotatable part (301, 302) of the bearing (9) is connected with the electrode (310), in particular via at least one spring (309), in particular at least one flat spring, the at least one spring (309) having one end connected to the electrode (310) and another end connected to a spring holder (308) which is connected to the rotatable part (301, 302) of the bearing (9).

13. The apparatus of any one of the preceding claims,
**characterized in that**
the gas passage (7) comprises a T-piece having three ports, a first port of the T-piece exiting in the gas pipe (12) towards the electrode (310), a second port of the T-piece exiting in the gas pipe (12) towards the electromotor (4), and a third port of the T-piece being connected to a gas supply (14), in particular a compressor.

14. The apparatus of any one of the preceding claims,
**characterized in that**
the coupling element (5), in particular the connecting element (11), is electrically conductive and attachable to a terminal (1a) of a voltage supply (1), and/or
the connecting element (11) comprises or consists of an electrical cable, in particular a braided cable.

15. A method of cutting an electrically conductive tube (13), in particular a tube of a heat exchanger system, for example of a nuclear power plant, with an apparatus in accordance with any one of the preceding claims, the method comprising:
introducing the electrode (310) of the apparatus into the tube (13), operating the electric motor (4) to rotate the electrode (310) around its longitudinal axis (A),
while rotating the electrode (310) around its longitudinal axis (A),
applying an electric voltage between the electrode (310) and the tube (13) to generate electric discharges between the electrode (310) and the tube (13).

## Patentansprüche

1. Vorrichtung zum Schneiden eines elektrisch leitenden Rohrs (13), welche Vorrichtung Folgendes umfasst:
eine Elektrode (310), die dafür eingerichtet ist, in ein Rohr (13) eingeführt zu werden, so dass eine Längsachse (A) der Elektrode (310) zumindest im Wesentlichen parallel zu oder zusammenfallend mit einer Mittelachse (C) des Rohrs (13) angeordnet ist,
eine elektrische Spannungsquelle (1) zum Bereitstellen einer elektrischen Spannung zwischen der Elektrode (310) und dem Rohr (13), insbesondere zum Erzeugen von elektrischen Entladungen zwischen der Elektrode (310) und dem Rohr (13),
einen elektrischen Motor (4) zum Drehen der Elektrode (310) um die Längsachse (A),
ein Kupplungselement (5) zum Kuppeln der Elektrode (310) mit dem Motor (4), wobei das Kupplungselement (5) dafür eingerichtet ist, eine Drehbewegung einer Welle (6) des Motors (4) an die Elektrode (310) zu übertragen, so dass die Elektrode (310) um ihre Längsachse (A) dreht,
einen Gasdurchgang (7) zum Einführen von Gas in das Innere des Rohrs (13), wobei der Gasdurchgang (7) eine gerade Gasleitung (12) umfasst, die kollinear zur Längsachse (A) zwischen dem Motor (4) und der Elektrode (310) angeordnet ist, und
das Kupplungselement (5) ein Verbindungselement (11) umfasst, das sich kollinear zur Längsachse (A) durch das Innere der Gasleitung (12) erstreckt, wobei das Verbindungselement (11) ein erstes Ende, das an der Motorwelle (6) befestigt ist, und ein zweites Ende (11a), das durch die Gasleitung (12) gehalten wird, aufweist,
**dadurch gekennzeichnet, dass**
eine Zugkrafteinrichtung (2) der Vorrichtung mindestens eine hohle Stange (208, 213) umfasst mit einem ersten Ende (208a), das einer Welle (6) des Motors (4) zugewandt ist, und einem zweiten Ende (213a) distal zum Motor (4), und dass ein erstes Ende (12a) der Gasleitung (12) durch das zweite Ende (213a) der mindestens einen hohlen Stange (208, 213) gehalten wird.

2. Vorrichtung nach Anspruch 1,
**dadurch gekennzeichnet, dass**
die Vorrichtung eine Zugkrafteinrichtung (2) umfasst, die dafür ausgelegt ist, die Gasleitung (12) entlang der Längsachse (A) von der Motorwelle (6) weg vorzuspannen.

3. Vorrichtung nach Anspruch 1 oder 2,
**dadurch gekennzeichnet, dass**
die mindestens eine hohle Stange (208, 213) zumindest eine hohle Stange mit Gewinde ist.

4. Vorrichtung nach einem der Ansprüche 1 bis 3,
**dadurch gekennzeichnet, dass**
die mindestens eine hohle Stange zwei hohle Stangen (208, 213) mit Gewinden umfasst oder daraus besteht, die miteinander durch die Anwendung einer Spannschlossmutter (212) verbunden sind.

5. Vorrichtung nach einem der vorstehenden Ansprüche,
**dadurch gekennzeichnet, dass**
die mindestens eine hohle Stange (208, 213) entlang der Längsachse (A) bewegbar ist, wobei die Vorrichtung vorzugsweise Führungsmittel (8) umfasst, die eine Bewegung ermöglichen, insbesondere eine Gleitbewegung, der mindestens einen hohlen Stange (208, 213) entlang der Längsachse (A).

6. Vorrichtung nach einem der vorstehenden Ansprüche,
**dadurch gekennzeichnet, dass**
eine Feder (207) zwischen der Welle (6) des Motors (4) und dem ersten Ende (208a) der mindestens einen Stange (208, 213) funktionell angeordnet ist.

7. Vorrichtung nach einem der vorstehenden Ansprüche,
**dadurch gekennzeichnet, dass**
eine Mittelachse der mindestens einen hohlen Stange (208, 213) zumindest im Wesentlichen mit einer Mittelachse des Kupplungselements (5) zusammenfällt.

8. Vorrichtung nach einem der vorstehenden Ansprüche,
**dadurch gekennzeichnet, dass**
das Verbindungselement (11) sich im Inneren der mindestens einen hohlen Stange (208, 213) erstreckt.

9. Vorrichtung nach einem der vorstehenden Ansprüche,
**dadurch gekennzeichnet, dass**
ein zweites Ende (12a) der Gasleitung (12), die der Elektrode zugewandt ist, dafür eingerichtet ist, ein Lager (9), insbesondere ein Drehlager oder ein Gleitlager, des Kupplungselements (5) aufzunehmen.

10. Vorrichtung nach Anspruch 9,
**dadurch gekennzeichnet, dass**
das zweite Ende (12a) der Gasleitung (12) einen aufgeweiteten, vorzugsweise konischen, Mund aufweist, der zum Aufnehmen eines konischen Elements des Lagers (9) eingerichtet ist.

11. Vorrichtung nach Anspruch 9 oder 10,
**dadurch gekennzeichnet, dass**
das zweite Ende (11a) des Verbindungselements (11) am drehbaren Teil (301, 302) des Lagers (9) befestigt ist, wobei der drehbare Teil (301, 302) des Lagers (9) um die Längsachse (A) drehbar ist.

12. Vorrichtung nach Anspruch 11,
**dadurch gekennzeichnet, dass**
der drehbare Teil (301, 302) des Lagers (9) mit der Elektrode (310) verbunden ist, insbesondere über mindestens eine Feder (309), insbesondere mindestens eine flache Feder, wobei die mindestens eine Feder (309) ein Ende, das mit der Elektrode (310) verbunden ist, und ein anderes Ende, das mit einer Federhalterung (308) verbunden ist, die mit dem drehbaren Teil (301, 302) des Lagers (9) verbunden ist, aufweist.

13. Vorrichtung nach einem der vorstehenden Ansprüche,
**dadurch gekennzeichnet, dass**
der Gasdurchgang (7) ein T-Stück mit drei Öffnungen umfasst, wobei eine erste Öffnung des T-Stücks in der Gasleitung (12) gegen die Elektrode (310) austritt, eine zweite Öffnung des T-Stücks in der Gasleitung (12) gegen den Elektromotor (4) austritt, und eine dritte Öffnung des T-Stücks mit einer Gasversorgung (14) verbunden ist, insbesondere mit einem Verdichter.

14. Vorrichtung nach einem der vorstehenden Ansprüche,
**dadurch gekennzeichnet, dass**
das Kupplungselement (5), insbesondere das Verbindungselement (11), elektrisch leitend ist und an einem Ausgang (1a) einer Spannungsversorgung (1) befestigbar ist, und/oder
das Verbindungselement (11) ein elektrisches Kabel, insbesondere ein geflochtenes Kabel, umfasst oder daraus besteht.

15. Verfahren zum Schneiden eines elektrisch leitenden Rohrs (13), insbesondere eines Rohrs eines Wärmetauschersystems, z.B. eines Kernkraftwerks, mit einer Vorrichtung nach einem der vorhergehenden Ansprüche, welches Verfahren Folgendes umfasst:
Einführen der Elektrode (310) der Vorrichtung in das Rohr (13),
Betreiben des elektrischen Motors (4) zum Drehen der Elektrode (310) um ihre Längsachse (A),
während die Elektrode (310) um ihre Längsachse (A) gedreht wird, Anlegen einer elektrischen Spannung zwischen der Elektrode (310) und dem Rohr (13) zur Erzeugung von elektrischen Entladungen zwischen der Elektrode (310) und dem Rohr (13).

## Revendications

1. Dispositif pour couper un tube électriquement conducteur (13), le dispositif comprenant :
une électrode (310) adaptée pour être introduite dans un tube (13) si bien qu'un axe longitudinal (A) de l'électrode (310) est au moins en substance disposé en parallèle ou coïncidant avec un axe central (C) du tube (13),
une source de tension électrique (1) pour fournir une tension électrique entre l'électrode (310) et le tube (13), en particulier pour générer des décharges électriques entre l'électrode (310) et le tube (13),
un moteur électrique (4) pour faire tourner l'électrode (310) autour de l'axe longitudinal (A),
un élément de couplage (5) pour coupler l'électrode (310) au moteur (4), l'élément de couplage (5) étant adapté pour transmettre un mouvement de rotation d'un arbre (6) du moteur (4) à l'électrode (310) si bien que l'électrode (310) tourne autour de son axe longitudinal (A),
un passage de gaz (7) pour introduire du gaz à l'intérieur du tube (13), le passage de gaz (7) comprenant un conduit de gaz droit (12) disposé de manière colinéaire avec l'axe longitudinal (A) entre le moteur (4) et le électrode (310), et
l'élément de couplage (5) comprend un élément de liaison (11) qui s'étend de manière colinéaire à l'axe longitudinal (A) à travers l'intérieur du conduit de gaz (12), l'élément de liaison (11) ayant une première extrémité fixée à l'arbre du moteur (6) et une deuxième extrémité (11a) maintenue par le conduit de gaz (12),
**caractérisé en ce**
**qu'**un dispositif de tension (2) de l'appareil comprend au moins une tige creuse (208, 213) ayant une première extrémité (208a) tournée vers un arbre (6) du moteur (4) et une deuxième extrémité (213a) distale du moteur (4), et **en ce qu**'un première extrémité (12a) du conduit de gaz (12) est maintenue par la deuxième extrémité (213a) de l'au moins une tige creuse (208, 213).

2. Dispositif selon la revendication 1,
**caractérisé en ce que**
le dispositif comprend un dispositif de tension (2) qui est configuré pour solliciter le conduit de gaz (12) le long de l'axe longitudinal (A) à l'écart de l'arbre du moteur (6).

3. Dispositif selon la revendication 1 ou 2,
**caractérisé en ce que**
l'au moins une tige creuse (208, 213) est au moins une tige creuse filetée.

4. Dispositif selon l'une quelconque des revendications 1 à 3,
**caractérisé en ce que**
l'au moins une tige creuse comprend ou est constituée de deux tiges creuses filetées (208, 213) couplées l'une à l'autre par l'utilisation d'un manchon de tendeur (212).

5. Dispositif selon l'une quelconque des revendications précédentes,
**caractérisé en ce que**
l'au moins une tige creuse (208, 213) est mobile le long de l'axe longitudinal (A), dans lequel, de préférence, le dispositif comprend des moyens de guidage (8) permettant un mouvement, en particulier un mouvement de coulissement, de l'au moins une tige creuse (208, 213) le long de l'axe longitudinal (A).

6. Dispositif selon l'une quelconque des revendications précédentes,
**caractérisé en ce**
**qu'**un ressort (207) est agencé fonctionnellement entre l'arbre (6) du moteur (4) et la première extrémité (208a) de l'au moins une tige (208, 213).

7. Dispositif selon l'une quelconque des revendications précédentes,
**caractérisé en ce**
**qu'**un axe central de l'au moins une tige creuse (208, 213) coïncide au moins en substance avec un axe central de l'élément d'accouplement (5).

8. Dispositif selon l'une quelconque des revendications précédentes,
**caractérisé en ce que**
l'élément de liaison (11) s'étend à l'intérieur d'au moins une tige creuse (208, 213).

9. Dispositif selon l'une quelconque des revendications précédentes,
**caractérisé en ce**
**qu'**une deuxième extrémité (12a) du conduit de gaz (12) faisant face à l'électrode est adaptée pour recevoir un palier (9), en particulier un palier rotatif ou un palier lisse, de l'élément d'accouplement (5).

10. Appareil selon la revendication 9,
**caractérisé en ce que**
la deuxième extrémité (12a) du conduit de gaz (12) a une bouche élargie, de préférence conique, adaptée pour recevoir un élément conique du palier (9).

11. Dispositif selon la revendication 9 ou 10,
**caractérisé en ce que**
la deuxième extrémité (11a) de l'élément de liaison (11) est fixée à une partie rotative (301, 302) du palier (9), la partie rotative (301, 302) du palier (9) pouvant tourner autour du palier longitudinal axe (A).

12. Appareil selon la revendication 11,
**caractérisé en ce que**
la partie rotative (301, 302) du palier (9) est reliée à l'électrode (310), notamment via au moins un ressort (309), en particulier au moins un ressort plat, l'au moins un ressort (309) ayant une extrémité reliée à l'électrode (310) et une autre extrémité connectée à un support de ressort (308) qui est relié à la partie rotative (301, 302) du palier (9).

13. Dispositif selon l'une quelconque des revendications précédentes,
**caractérisé en ce que**
le passage de gaz (7) comprend une pièce en T ayant trois orifices, un premier orifice de la pièce en T sortant dans le conduit de gaz (12) vers l'électrode (310), un deuxième orifice de la pièce en T sortant dans le conduit de gaz (12) vers l'électromoteur (4), et un troisième orifice de la pièce en T étant relié à une alimentation en gaz (14), en particulier un compresseur.

14. Dispositif selon l'une quelconque des revendications précédentes,
**caractérisé en ce que**
l'élément de couplage (5), en particulier l'élément de liaison (11), est électriquement conducteur et peut être fixé à une borne (1a) d'une alimentation en tension (1), et / ou
l'élément de liaison (11) comprend ou consiste en un câble électrique, en particulier un câble tressé.

15. Procédé pour couper un tube électriquement conducteur (13), en particulier un tube d'un système d'échangeur de chaleur, par exemple d'une centrale nucléaire, avec un dispositif selon l'une quelconque des revendications précédentes, le procédé comprenant :
l'introduction d'une électrode (310) du dispositif dans le tube (13),
l'actionnement du moteur électrique (4) pour faire tourner l'électrode (310) autour de son axe longitudinal (A),
tout en faisant tourner l'électrode (310) autour de son axe longitudinal (A), l'application d'une tension électrique entre l'électrode (310) et le tube (13) pour générer des décharges électriques entre l'électrode (310) et le tube (13).
